# EUROPÄISCHE PATENTSCHRIFT

(11) **EP 4 083 399 B1**
(45) Veröffentlichungstag und Bekanntmachung des Hinweises auf die Patenterteilung: **03.01.2024**
(21) Anmeldenummer: 22169031.6
(22) Anmeldetag: 20.04.2022
(51) Int. Cl.: F01N 13/00, F01N 3/20, F01N 3/021, F01N 5/04

(54) **BRENNKRAFTMASCHINE MIT ELEKTRISCHER ABGASTURBINE UND ABGASNACHBEHANDLUNGSEINRICHTUNG STROMAUF DER ABGASTURBINE**
COMBUSTION ENGINE WITH ELECTRIC EXHAUST GAS TURBINE AND EXHAUST GAS AFTER-TREATMENT DEVICE UPSTREAM OF THE EXHAUST GAS TURBINE
MOTEUR À COMBUSTION INTERNE POURVU DE TURBINE ÉLECTRIQUE À GAZ D'ÉCHAPPEMENT ET DISPOSITIF DE POST-TRAITEMENT DES GAZ D'ÉCHAPPEMENT EN AMONT DE LA TURBINE À GAZ D'ÉCHAPPEMENT

(30) Priorität: 27.04.2021 DE 102021110658
(43) Veröffentlichungstag der Anmeldung: 02.11.2022
(73) Patentinhaber: VOLKSWAGEN AG, 38440 Wolfsburg (DE)
(72) Erfinder: Pott, Ekkehard, 38518 Gifhorn (DE)
(74) Vertreter: Bungartz, Florian

(56) Entgegenhaltungen:
- DE-A1-102014 205 878
- DE-A1-102019 134 085

## Beschreibung

Die Erfindung betrifft eine Brennkraftmaschine mit einem Verbrennungsmotor und einem Abgasstrang, in den eine elektrische Abgasturbine, d.h. eine Abgasturbine, die mit einer Elektromaschine antriebsverbunden ist, und eine Abgasnachbehandlungseinrichtung integriert sind.

Eine derartige Brennkraftmaschine ist sowohl aus der DE 10 2016 200 923 A1 als auch aus der DE 10 2017 220 524 B3 bekannt. Darin ist auch offenbart, dass die generatorische Last der Abgasturbine gezielt zur Steuerung einer Temperatur des über den Abgasstrang geführten Abgases variiert werden kann. Die in diesen Druckschriften offenbarten Brennkraftmaschinen umfassen jeweils auch eine in den Abgasstrang integrierte Abgasnachbehandlungseinrichtung, die stromab der jeweiligen elektrischen Abgasturbine angeordnet ist.

Die DE 10 2018 130 799 A1 beschreibt einen Brennkraftmaschine für ein Kraftfahrzeug. Die Brennkraftmaschine ist mittels eines Abgasturboladers aufgeladen, der einen Frischgasverdichter und eine Abgasturbine aufweist, die durch eine Antriebswelle miteinander verbunden sind. Um Abgasnachbehandlungskomponenten der Brennkraftmaschine nach einem Kaltstart möglichst schnell auf eine Betriebstemperatur aufzuheizen, ist in einem Abgasstrang der Brennkraftmaschine stromaufwärts der Abgasturbine ein Brenner vorgesehen, in dem ein Brennstoff exotherm umgesetzt werden kann. Die Antriebswelle des Abgasturboladers ist zumindest mittelbar mit einer Kurbelwelle eines Verbrennungsmotors der Brennkraftmaschine verbunden, um zumindest einen Teil der von dem Brenner freigesetzten Abgasenthalpie zurückzugewinnen.

Die DE 10 2014 205 878 A1 offenbart eine Brennkraftmaschine mit einem Abgasturbolader, wobei zumindest ein Abgasnachbehandlungselement stromaufwärts einer Turbine des Abgasturboladers angeordnet ist. Der Abgasturbolader kann einen Elektromotor umfassen, der von einem Speicher und/oder von einer elektrischen Maschine, die in einen hybriden Antriebsstrang der Brennkraftmaschine integriert ist, mit elektrischer Energie versorgt werden kann.

Die DE 10 2019 134 085 A1 offenbart, elektrische Leistung mittels eines Generators, der mit einer Abgasturbine gekoppelt ist, die in einen Abgasstrang einer Brennkraftmaschine integriert ist, zu erzeugen. Mit der elektrischen Leistung soll eine Heizvorrichtung betrieben werden, womit ein Aufheizen mindestens einer Abgasnachbehandlungskomponente in dem Abgasstrang bewirkt werden soll.

Der Erfindung lag die Aufgabe zugrunde, das Abgasemissionsverhalten einer Brennkraftmaschine zu verbessern.

Diese Aufgabe ist durch ein Verfahren gemäß dem Patentanspruch 1 gelöst. Bevorzugte Ausführungsformen des erfindungsgemäßen Verfahrens sind Gegenstände der weiteren Patentansprüche und/oder ergeben sich aus der nachfolgenden Beschreibung der Erfindung.

Erfindungsgemäß ist eine Verwendung einer Brennkraftmaschine vorgesehen, die einen Verbrennungsmotor und einen Abgasstrang zum Abführen von Abgas von dem Verbrennungsmotor (und zum zumindest teilweisen Einleiten in die Umgebung) umfasst, wobei in den Abgasstrang zumindest eine (elektrische) Abgasturbine, die mit einer Elektromaschine antriebsverbunden ist, und eine (erste) Abgasnachbehandlungseinrichtung integriert sind. Dabei ist vorgesehen, dass die (erste) Abgasnachbehandlungseinrichtung stromauf der Abgasturbine in den Abgasstrang integriert ist.

Eine solche Brennkraftmaschine ermöglicht in vorteilhafter Weise die Durchführung eines erfindungsgemäßen Verfahrens, bei dem zumindest temporär ein generatorischer oder motorischer Betrieb der Elektromaschine in Abhängigkeit von der Temperatur von Abgas stromauf der Abgasturbine, insbesondere der Temperatur an zumindest einer Stelle in der (ersten) Abgasnachbehandlungseinrichtung, beziehungsweise in Abhängigkeit von dem thermischen Zustand der (ersten) Abgasnachbehandlungseinrichtung gesteuert wird. Insbesondere kann dazu vorgesehen sein, dass die mit der Abgasturbine antriebsverbundene Elektromaschine temporär zur gezielten Temperierung (d.h. einem Aufheizen oder Auf-Temperatur-Halten) der ersten Abgasnachbehandlungseinrichtung in einem Maße generatorisch betrieben wird, der relativ hoch ist und der insbesondere über den aktuellen Bedarf des Frischgasverdichters hinausgeht. Mittels der Elektromaschine wird somit gezielt ein relativ großer Antriebswiderstand für die Abgasturbine beziehungsweise für das dazugehörige Turbinenlaufrad erzeugt, wodurch das Abgas stromauf der Abgasturbine in einem relativ großen Ausmaß aufgestaut wird. Dadurch kann ein erhöhter Wärmeübergang auf die stromauf der Abgasturbine in den Abgasstrang integrierte (erste) Abgasnachbehandlungseinrichtung realisiert werden, was sich vorteilhaft auf die Temperierung dieser Abgasnachbehandlungseinrichtung auswirken kann. Vor diesem Hintergrund kann ein solches erfindungsgemäßes Verfahren insbesondere während einer Warmlaufphase der Brennkraftmaschine, die sich insbesondere an einen Kaltstart anschließen kann, und/oder während eines Regenerationsbetriebs der Brennkraftmaschine, in der die erste Abgasnachbehandlungseinrichtung beziehungsweise zumindest eine Abgasnachbehandlungskomponente davon thermisch regeneriert wird, durchgeführt werden.

Als "Warmlaufphase" gilt grundsätzlich ein Betrieb der Brennkraftmaschine, bei der zumindest eine Abgasnachbehandlungskomponente der Abgasnachbehandlungseinrichtung(en) eine Betriebstemperatur aufweisen, die unter der dazugehörigen Anspringtemperatur liegt. Als "Kaltstart" gilt grundsätzlich eine Inbetriebnahme der Brennkraftmaschine, bei der zumindest eine Abgasnachbehandlungskomponente der Abgasnachbehandlungseinrichtung(en) eine Betriebstemperatur aufweist, die ungefähr (d.h. auch mit einer Abweichung von bis zu 10K, 20K oder 30K) der Umgebungstemperatur entspricht. Eine Warmlaufphase muss sich dabei nicht immer an einen Kaltstart oder an eine Inbetriebnahme der Brennkraftmaschine mit einer unterhalb einer dazugehörigen Anspringtemperatur liegenden Betriebstemperatur zumindest einer Abgasnachbehandlungskomponente anschließen; vielmehr kann eine Warmlaufphase auch damit beginnen, dass die Brennkraftmaschine und insbesondere der Verbrennungsmotor zuvor derart betrieben wurde, dass die zuvor bereits überschrittene Anspringtemperatur wieder unterschritten wird, wie dies gegebenenfalls bei einem länger andauernden Leerlauf- oder Schubbetrieb des Verbrennungsmotors der Fall sein kann.

Gemäß einer bevorzugten Ausgestaltungsform einer erfindungsgemäß verwendeten Brennkraftmaschine kann vorgesehen sein, dass die (erste) Abgasnachbehandlungseinrichtung zumindest einen Oxidationskatalysator (vorzugsweise mit einer Beladung mit Edelmetall (z.B. Platin), die weiterhin bevorzugt weniger als 100 g/ft³ beziehungsweise 3,53 kg/m³ beträgt) und/oder einen Stickoxidspeicher (insbesondere in einer Ausgestaltung als Stickoxidspeicherkatalysator oder als Stickoxidadsorber) und/oder einen Partikelfilter umfasst. Der Stickoxidspeicher kann dabei vorteilhaft auch als Beschichtung auf einem Filterkörper des Partikelfilters aufgebracht sein. Besonders bevorzugt ist vorgesehen, dass die (erste) Abgasnachbehandlungseinrichtung einen Oxidationskatalysator und einen Stickoxidspeicher und einen Partikelfilter umfasst, weil dadurch eine weitgehend vollständige Nachbehandlung des Abgases hinsichtlich der zu eliminierenden Schadstoffe möglich ist. Der Oxidationskatalysator kann dabei insbesondere für eine Oxidation von unverbrannten Kohlenwasserstoffen (HC) und Kohlenmonoxid (CO) sorgen, während der Stickoxidspeicher temporär in dem Abgas enthaltene Stickoxide (NOx) binden kann. Der Partikelfilter entfernt dagegen Partikel, insbesondere Rußpartikel, aus dem Abgas.

Eine erfindungsgemäß verwendete Brennkraftmaschine umfasst weiterhin einen Frischgasstrang, der für ein Zuführen von Frischgas zu dem Verbrennungsmotor vorgesehen ist und in den ein Frischgasverdichter integriert ist. Das Frischgas besteht dabei zumindest teilweise aus Luft, die aus der Umgebung angesaugt wurde. Der Frischgasverdichter ist mit einer weiteren Elektromaschine antriebsverbunden. Dabei kann bevorzugt eine vollständige mechanische Entkopplung der Abgasturbine und des Frischgasverdichters realisiert sein, wobei diese jedoch elektrisch gekoppelt sind, so dass mittels der mit der Abgasturbine gekoppelten Antriebsmaschine elektrische Leistung bereitgestellt werden kann, die für den bedarfsweisen Antrieb der den Frischgasverdichter antreibenden weiteren Elektromaschine benötigt wird. Dabei kann die erzeugte elektrische Energie vorzugsweise bedarfsweise in einer an die Elektromaschinen angeschlossenen Speichervorrichtung, beispielsweise einer Batterie, zwischengespeichert werden, wodurch insbesondere ein Antrieb des Frischgasverdichters mittels der damit antriebsverbunden Elektromaschine zeitlich von einer generatorischen beziehungsweise elektrischen Leistung der mit der Abgasturbine gekoppelten Elektromaschine entkoppelt werden kann.

Eine erfindungsgemäße Brennkraftmaschine ermöglicht durch diese Ausgestaltung auch die Durchführung eines erfindungsgemäßen Verfahrens, bei dem zumindest temporär ein generatorischer oder motorischer Betrieb der mit dem Frischgasverdichter antriebsverbundenen Elektromaschine in Abhängigkeit von der Temperatur von Abgas stromauf der Abgasturbine gesteuert wird. Beispielsweise kann vorgesehen sein, dass für ein gezieltes Temperieren der (ersten) Abgasnachbehandlungseinrichtung durch einen generatorischen oder einen gezielt relativ schwachen motorischen Betrieb der mit dem Frischgasverdichter antriebsverbundenen Elektromaschine ein Drosseln von über den Frischgasstrang dem Verbrennungsmotor zuzuführendem Frischgas erreicht wird. Eine daraus folgende Reduktion der Füllung des oder der Brennräume des Verbrennungsmotors kann innermotorische Maßnahmen, die gezielt zur Erzielung relativ heißen Abgases umgesetzt werden, vorteilhaft unterstützen.

Eine antriebstechnische Entkopplung des Frischgasverdichters von der Abgasturbine durch dessen Antriebsverbindung mit einer eigenen Elektromaschine ermöglicht weiterhin, den Frischgasverdichter wie auch die Abgasturbine flexibel positionieren zu können, was sich insbesondere vorteilhaft bei der Integration einer erfindungsgemäßen Brennkraftmaschine in ein Kraftfahrzeug auswirken kann. Zudem wird dadurch ermöglicht, den Frischgasverdichter vorteilhaft auf einer Seite des Verbrennungsmotors zu positionieren, auf der der Frischgasstrang in den Verbrennungsmotor mündet, wodurch diese Seite des Verbrennungsmotors relativ kalt ist. Dadurch kann der Frischgasverdichter konstruktiv relativ einfach und damit kostengünstig ausgestaltet sein.

Eine erfindungsgemäß verwendete Brennkraftmaschine kann weiterhin bevorzugt zumindest eine Abgasrückführleitung (mit zugeordnetem Abgasrückführventil) aufweisen, die aus dem Abgasstrang abzweigt und in den Frischgasstrang mündet. Die Abgasrückführleitung zweigt dabei stromauf der Abgasturbine und bevorzugt stromab der ersten Abgasnachbehandlungseinrichtung aus dem Abgasstrang ab, weil dies ermöglicht, dass im Rahmen eines erfindungsgemäßen Verfahrens zumindest temporär ein generatorischer oder motorischer Betrieb zumindest einer der Elektromaschinen in Abhängigkeit von dem über der Abgasrückführleitung anliegenden Druckgefälle (Überdruck auf der Seite des Abgasstrangs im Vergleich zu dem Frischgasstrang) gesteuert wird. Insbesondere kann vorgesehen sein, dass die mit der Abgasturbine antriebsverbundene Elektromaschine temporär (auch) zur gezielten Erhöhung des Druckgefälles in einem Maße generatorisch betrieben wird, der über den aktuellen Bedarf des Frischgasverdichters hinausgeht.

Die Abgasrückführleitung mündet bei einer erfindungsgemäß verwendeten Brennkraftmaschine stromauf des Frischgasverdichters in den Frischgasstrang. Eine solche Abgasrückführleitung wird nachfolgend auch als Niederdruck-Abgasrückführleitung bezeichnet, obwohl diese, anders als konventionelle Niederdruck-Abgasrückführleitungen, stromauf der Abgasturbine aus dem Abgasstrang abzweigt.

Eine erfindungsgemäß verwendete Brennkraftmaschine kann grundsätzlich auch noch eine weitere Abgasrückführleitung, insbesondere eine Hochdruck-Abgasrückführleitung umfassen, die ebenfalls stromauf der Abgasturbine (und insbesondere auch stromauf der (ersten) Abgasnachbehandlungseinrichtung) aus dem Abgaszwang abzweigt und die stromab des Frischgasverdichters in den Frischgasstrang mündet. Vorzugsweise ist jedoch vorgesehen, dass eine erfindungsgemäße Brennkraftmaschine eine solche Hochdruck-Abgasrückführleitung nicht umfasst, weil diese aufgrund der erfindungsgemäßen Ausgestaltung einer Brennkraftmaschine funktional vermeidbar ist. Der mit der Integration einer solchen Hochdruck-Abgasrückführleitung verbundene Aufwand kann daher vermieden werden.

Eine erfindungsgemäß verwendete Brennkraftmaschine kann weiterhin bevorzugt eine zweite Abgasnachbehandlungseinrichtung, die stromab der Abgasturbine in den Abgasstrang integriert ist, aufweisen, um eine möglichst vollständige Reduktion von Schadstoffen in dem Abgas in sämtlichen Betriebszuständen der Brennkraftmaschine zu realisieren. Bei einer solchen erfindungsgemäß verwendeten Brennkraftmaschine kann vorzugsweise auch die Durchführung eines erfindungsgemäßen Verfahrens vorgesehen sein, bei dem zumindest temporär ein generatorischer oder motorischer Betrieb zumindest einer der Elektromaschinen in Abhängigkeit von der Temperatur von Abgas stromab der Abgasturbine beziehungsweise in Abhängigkeit von dem thermischen Zustand der zweiten Abgasnachbehandlungseinrichtung gesteuert wird.

Vorzugsweise umfasst die zweite Abgasnachbehandlungseinrichtung zumindest einen Stickoxidreduktionskatalysator (insbesondere SCR-Katalysator) und eine diesem zugeordnete Heizvorrichtung, d.h. durch einen Betrieb der Heizvorrichtung kann gezielt zumindest eine Erwärmung des Stickoxidreduktionskatalysators bewirkt werden. Hierzu kann die Heizvorrichtung in den Stickoxidreduktionskatalysator integriert oder, vorzugsweise, stromauf davon in dem Abgasstrang angeordnet sein, um über das Abgas eine indirekte Beheizung des Stickoxidreduktionskatalysators zu bewirken. Ein solcher Stickoxidreduktionskatalysator der zweiten Abgasnachbehandlungseinrichtung kann insbesondere dann sinnvoll sein, wenn, wie dies vorzugsweise vorgesehen ist, die erste, stromauf der Abgasturbine angeordnete Abgasnachbehandlungseinrichtung lediglich einen Stickoxidspeicher (und keinen Stickoxidreduktionskatalysator) umfasst. Der Stickoxidreduktionskatalysator kann dann für eine Reduktion der Stickoxide und damit für deren Umwandlung in unschädliche Bestandteile sorgen, wenn Stickoxide in dem Abgas von dem Stickoxidspeicher nicht mehr eingelagert werden, beispielsweise weil dessen Speicherkapazität ausgeschöpft ist, oder von diesem sogar freigesetzt werden, wie dies bei einem Stickoxidspeicher üblicherweise der Fall sein kann, wenn dieser bis zu einer Temperatur, die über einer definierten Betriebstemperatur (Desorptionstemperatur) liegt, erwärmt wird. Ein solches Freisetzen von Stickoxiden aus dem Stickoxidspeicher kann dabei auch gewollt sein, um insbesondere dann, wenn in einem ausreichenden Maße eine Reduktion der Stickoxide mittels des Stickoxidreduktionskatalysators bewirkt werden kann (weil dieser eine Betriebstemperatur aufweist, die oberhalb seiner Anspringtemperatur (z.B. ca. 230°C) liegt, ab der von einer ausreichenden Wirksamkeit hinsichtlich der Stickoxidreduktion ausgegangen werden kann), die Speicherkapazität des Stickoxidspeichers wieder zu erhöhen. Dadurch kann dieser für eine Speicherung von Stickoxiden in einem späteren Betriebszustand der Brennkraftmaschine, wenn eine Reduktion der Stickoxide mittels des Stickoxidreduktionskatalysators nicht in einem ausreichenden Maße möglich ist, zur Verfügung stehen.

Da eine erfindungsgemäß verwendete Brennkraftmaschine durch die Anordnung der ersten Abgasnachbehandlungseinrichtung mit dem vorzugsweise von dieser umfassten Stickoxidspeicher stromauf der Abgasturbine und damit relativ nah an dem Verbrennungsmotor sowie durch das erfindungsgemäß mögliche Aufstauen von Abgas durch einen generatorischen Betrieb der mit der Abgasturbine antriebsverbundenen Elektromaschine ein sehr schnelles Aufheizen der ersten Abgasnachbehandlungseinrichtung und damit des Stickoxidspeichers ermöglicht, sollte vorzugsweise gewährleistet sein, dass der Stickoxidreduktionskatalysator, der vorzugsweise Bestandteil der stromab der Abgasturbine in den Abgasstrang integrierten zweiten Abgasnachbehandlungseinrichtung ist und dadurch nur relativ langsam durch Wärmeenergie, die das Abgas bereits beim Verlassen des Verbrennungsmotors aufweist, erwärmt wird, seine Anspringtemperatur bereits erreicht hat, wenn der sich schnell aufheizende Stickoxidspeicher seine Desorptionstemperatur erreicht. Dies kann durch einen Betrieb der vorzugsweise vorgesehenen Heizvorrichtung gewährleistet werden. Dadurch kann sichergestellt werden, dass Stickoxide, die von dem Stickoxidspeicher nach dem Erreichen der Desorptionstemperatur freigesetzt wurden, von dem Stickoxidreduktionskatalysator in einem ausreichenden Maße reduziert werden.

Dementsprechend kann gemäß einer bevorzugten Ausführungsform eines erfindungsgemäßen Verfahrens, bei dem die mit der Abgasturbine antriebsverbundene Elektromaschine temporär zur gezielten Temperierung der ersten Abgasnachbehandlungseinrichtung generatorisch betrieben wird, gleichzeitig die Heizvorrichtung betrieben werden, wobei die gezielte Temperierung durch den generatorischen Betrieb der mit der Abgasturbine antriebsverbundenen Elektromaschine so gesteuert wird, dass der Stickoxidreduktionskatalysator der zweiten Abgasnachbehandlungseinrichtung seine Anspringtemperatur erreicht bevor der Stickoxidspeicher der ersten Abgasnachbehandlungseinrichtung seine Desorptionstemperatur erreicht.

Da die erste Abgasnachbehandlungseinrichtung erfindungsgemäß relativ schnell auch bis zum Erreichen der Desorptionstemperatur des vorzugsweise von dieser umfassten Stickoxidspeichers aufgeheizt werden kann, sollte die Heizvorrichtung eine ausreichend hohe Heizleistung aufweisen, um zu gewährleisten, dass der vorzugsweise von der zweiten Abgasnachbehandlungseinrichtung umfasste Stickoxidreduktionskatalysator entsprechend schnell seine Anspringtemperatur erreicht. Insbesondere kann vorgesehen sein, dass die Heizvorrichtung eine maximale (Peak-)Heizleistung von mindestens 15 kW, 20 kW, 25 kW oder 30 kW aufweist. Derartige Heizleistungen sind insbesondere mittels eines Brenners erzielbar, so dass eine erfindungsgemäß verwendete Brennkraftmaschine mit Heizvorrichtung vorzugsweise einen solchen Brenner umfasst. Dieser Brenner kann weiterhin bevorzugt stromauf des Stickoxidreduktionskatalysators in dem Abgasstrang angeordnet sein, um eine indirekte Beheizung des Stickoxidreduktionskatalysators zu bewirken. Als "Brenner" wird dabei eine Vorrichtung verstanden, die separat zugeführten Kraftstoff mit Sauerstoff, insbesondere als Bestandteil von Luft, verbrennt und dadurch ein Heißgas erzeugt, das zur direkten Beheizung oder, durch ein Vermischen mit dem Abgas, zur indirekten Beheizung genutzt werden kann.

Um eine möglichst gleichmäßige Beheizung des Stickoxidreduktionskatalysators bei einer indirekten Beheizung mittels der Heizvorrichtung zu gewährleisten, kann vorzugsweise vorgesehen sein, dass zwischen der Heizvorrichtung und dem Stickoxidreduktionskatalysator eine Mischvorrichtung in dem Abgasstrang angeordnet ist, wodurch das Abgas so durchmischt werden kann, dass dieses mit einer möglichst homogenen Temperatur über dem Strömungsquerschnitt in den Stickoxidreduktionskatalysator einströmt. Ergänzend dazu kann die Mischvorrichtung auch für eine möglichst gleichmäßige Verteilung von in das Abgas einzubringendem Reduktionsmittel (z.B. Ammoniak oder eine ammoniakhaltige Flüssigkeit) sorgen, das für eine Reduktion der Stickoxide mittels des Stickoxidreduktionskatalysators erforderlich sein kann. Demnach sollte eine entsprechende Injektionsvorrichtung für das Reduktionsmittel zumindest stromauf der vorzugsweise vorgesehenen Mischvorrichtung angeordnet sein. Besonders bevorzugt ist eine solche Injektionsvorrichtung auch stromauf der Heizvorrichtung angeordnet, um einen für eine gute Durchmischung des Reduktionsmittels mit dem Abgas ausreichenden Strömungsweg zwischen der Injektionsvorrichtung und dem Stickoxidreduktionskatalysators bereitzustellen.

Ein Stickoxidreduktionskatalysator weist üblicherweise einen Betriebstemperaturbereich auf, innerhalb dessen die Stickoxidreduktion ausreichend wirksam ist. Dieser Betriebstemperaturbereich kann sich von der Anspringtemperatur (z.B. 230°C) als unterem Grenzwert bis zu einem oberen Grenzwert von beispielsweise 550°C erstrecken. Bei einer Betriebstemperatur des Stickoxidreduktionskatalysators oberhalb dieses oberen Grenzwerts kann dessen Fähigkeit zur Stickoxidreduktion eingeschränkt sein und/oder eine derart hohe Betriebstemperatur kann sich negativ auf die Lebensdauer beziehungsweise die Stickoxidreduktionsfähigkeit über der Lebensdauer des Stickoxidreduktionskatalysators auswirken. Um ein Erwärmen des Stickoxidreduktionskatalysators über einen solchen oberen Grenzwert hinaus möglichst zu vermeiden, ist dieser vorzugsweise Bestandteil der zweiten, stromab der Abgasturbine in dem Abgasstrang angeordneten Abgasnachbehandlungseinrichtung, womit dieser grundsätzlich mit nur noch relativ kaltem Abgas beaufschlagt wird. Dennoch könnte es vorkommen, dass, beispielsweise bei einem relativ lange andauernden Betrieb des Verbrennungsmotors mit Volllast, Abgas, das die zweite Abgasnachbehandlungseinrichtung durchströmt, eine Temperatur aufweist, die oberhalb dieses oberen Grenzwerts liegt. Um dies zu vermeiden kann vorgesehen sein, dass ein generatorischer Betrieb der mit der Abgasturbine antriebsverbundenen Elektromaschine temporär zur gezielten Begrenzung einer Betriebstemperatur der zweiten Abgasnachbehandlungseinrichtung und insbesondere des Stickoxidreduktionskatalysators gesteuert wird.

Möglich ist weiterhin eine gezielte Temperierung der zweiten Abgasnachbehandlungseinrichtung durch einen relativ schwachen generatorischen Betrieb (bis hin zu einem Nichtbetrieb) der mit der Abgasturbine antriebsverbundenen Elektromaschine, der insbesondere auch so gering sein kann, dass dieser den aktuellen Bedarf des Frischgasverdichters nicht deckt. Dadurch kann relativ oder sogar möglichst wenig Abgasenthalpie in der Abgasturbine umgesetzt werden, so dass relativ viel Wärmeenergie des Abgases für ein Temperieren der zweiten Abgasnachbehandlungseinrichtung zur Verfügung steht. Ein solches Vorgehen kann insbesondere während eines länger andauernden Schwachlastbetriebs des Verbrennungsmotors vorgesehen sein.

Für eine möglichst vollständige Abgasnachbehandlung kann die zweite Abgasnachbehandlungseinrichtung vorzugsweise (auch) einen Oxidationskatalysator (vorzugsweise mit einer Beladung mit Edelmetall (z.B. Platin), die weiterhin bevorzugt mindestens 50 g/ft³ beziehungsweise 1,77 kg/m³ beträgt) und/oder einen Stickoxidspeicher und/oder einen Partikelfilter (in einer Ausgestaltung als offener oder geschlossener Partikelfilter) umfassen. Der Stickoxidspeicher kann dabei weiterhin bevorzugt stromauf des Stickoxidreduktionskatalysators angeordnet sein. Der Oxidationskatalysator und/oder der Partikelfilter können dagegen vorzugsweise stromab des Stickoxidreduktionskatalysators in dem Abgasstrang angeordnet sein. Der Oxidationskatalysator kann dadurch insbesondere auch die Funktion eines Sperrkatalysators aufweisen, durch den ein möglicher Schlupf von Reduktionsmittel durch den Stickoxidreduktionskatalysator unschädlich gemacht wird. Hierzu kann vorzugsweise vorgesehen sein, dass der Oxidationskatalysator ein Volumen aufweist, das mindestens 50% oder 80 % oder 100% des Hubvolumens des Verbrennungsmotors entspricht.

Gemäß einer bevorzugten Ausgestaltungsform einer erfindungsgemäßen Brennkraftmaschine kann eine mit dem Verbrennungsmotor antriebsverbundene, elektrische Antriebsmaschine vorgesehen sein. Ein Kraftfahrzeug, das eine solche erfindungsgemäße Brennkraftmaschine umfasst, kann demnach in Form eines Hybridfahrzeugs ausgestaltet sein. Bei einer solchen Brennkraftmaschine kann die elektrische Antriebsmaschine vorteilhaft dazu genutzt werden, Auswirkungen auf die von dem Verbrennungsmotor erzeugte Antriebsleistung, die sich daraus ergeben, dass die mit der Abgasturbine antriebsverbundene Elektromaschine und/oder die mit dem Frischgasverdichter antriebsverbundene Elektromaschine in Abhängigkeit von der Temperatur von Abgas stromauf und/oder stromab der Abgasturbine und/oder von dem über der Abgasrückführleitung anliegenden Druckgefälle gesteuert wird/werden, zu kompensieren, so dass eine insgesamt von der Brennkraftmaschine erzeugte Ist-Antriebsleistung einer vorgesehenen Soll-Antriebsleistung entspricht.

Ein erfindungsgemäßes Verfahren kann grundsätzlich zumindest temporär in Verbindung mit bekannten innermotorischen Maßnahmen, die darauf abzielen, relativ heißes Abgas zu erzeugen, um gezielt ein möglichst schnelles Aufheizen des Abgasstrangs beziehungsweise der darin integrierten Abgasnachbehandlungseinrichtung(en) zu erreichen, kombiniert werden. Derartige Maßnahmen sind beispielsweise eine relativ späte Einspritzung oder Nacheinspritzung von Kraftstoff.

Der Verbrennungsmotor einer erfindungsgemäßen Brennkraftmaschine kann vorzugsweise selbstzündend und insbesondere als (selbstzündender und qualitätsgeregelter) Dieselmotor ausgestaltet sein. Grundsätzlich besteht jedoch auch die Möglichkeit, dass es sich bei dem Verbrennungsmotor um einen (fremdgezündeten und quantitätsgeregelten) Ottomotor oder um eine Kombination daraus, d.h. z.B. um einen Verbrennungsmotor mit homogener Kompressionszündung, handelt. Der Verbrennungsmotor kann dabei sowohl mit Flüssigkraftstoff (d.h. Diesel oder Benzin) als auch mit einem gasförmigen Kraftstoff (insbesondere Erdgas, LNG oder LPG) betrieben werden.

Die Erfindung betrifft weiterhin ein Kraftfahrzeug, insbesondere ein radbasiertes und nicht schienengebundenes Kraftfahrzeug (vorzugsweise ein PKW oder ein LKW), mit einer erfindungsgemäßen Brennkraftmaschine. Dabei kann der Verbrennungsmotor der Brennkraftmaschine insbesondere zur (direkten oder indirekten) Bereitstellung der Fahrantriebsleistung für das Kraftfahrzeug vorgesehen sein. Bei einem solchen Kraftfahrzeug kann die erste Abgasnachbehandlungseinrichtung insbesondere in einem Motorraum des Kraftfahrzeugs angeordnet sein. Die vorzugsweise vorgesehen zweite Abgasnachbehandlungseinrichtungen kann dagegen vorzugsweise unterhalb eines Unterbodens des Kraftfahrzeugs angeordnet sein.

Die Elektromaschine(n) eines erfindungsgemäßen Kraftfahrzeugs können insbesondere mit einer Nennspannung von mindestens 48 V, vorzugsweise von mindestens 100 V betreibbar sein, um ausreichend hohe Antriebsleistungen bei noch relativ geringen elektrischen Strömen generieren zu können.

Die Ausgestaltung einer erfindungsgemäß verwendeten Brennkraftmaschine ermöglicht, auf ein Drosselventil, das, insbesondere stromauf des Frischgasverdichters, in den Frischgasstrang integriert ist, zu verzichten. Ebenso kann auch ein konventionelles Abgasventil, das üblicherweise stromab der Abzweigung einer Niederdruck-Abgasrückführleitung in den Abgasstrang integriert ist, verzichtet werden. Der mit der Integration eines solchen Drosselventils und/oder Abgasventils verbundene Aufwand kann daher vermieden werden.

Die Erfindung wird nachfolgend anhand von in den Zeichnungen dargestellten Ausgestaltungsbeispielen näher erläutert. In den Zeichnungen zeigt, jeweils in vereinfachter Darstellung:
- Fig. 1:: eine erfindungsgemäße Brennkraftmaschine gemäß einer ersten Ausgestaltungsform; und
- Fig. 2:: eine erfindungsgemäße Brennkraftmaschine gemäß einer zweiten Ausgestaltungsform.

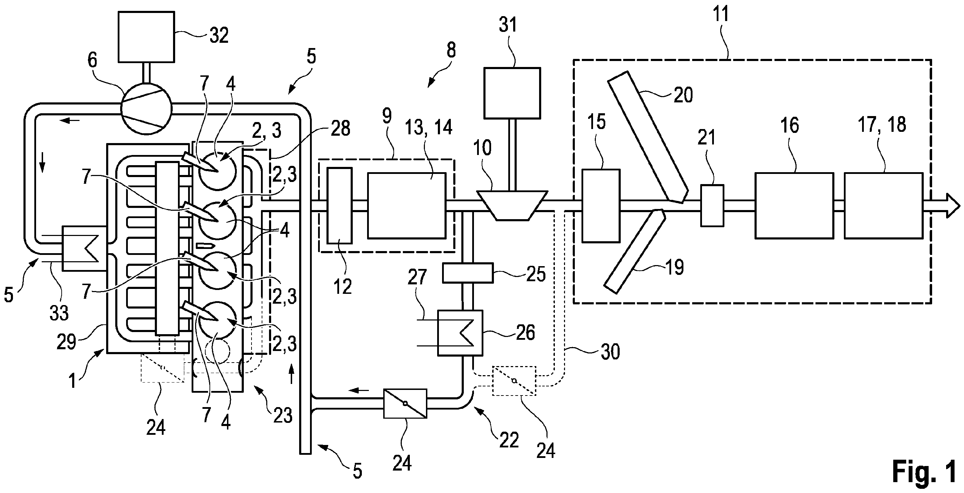

Die Fig. 1 eine erfindungsgemäße Brennkraftmaschine, wie sie als Teil eines Kraftfahrzeugs zum Einsatz kommen kann.

In einem Verbrennungsmotor 1 der Brennkraftmaschine 1 sind eine Mehrzahl von Brennräumen 2 ausgebildet. Im Betrieb der Brennkraftmaschine wird in bekannter Weise in definierter Reihenfolge in den Brennräumen 2, die teilweise von Zylinderöffnungen 3 des Verbrennungsmotors 1 sowie von darin beweglich geführten Kolben 4 begrenzt sind, Gemischmengen verbrannt, wobei die so erzeugten Druckerhöhungen in den Brennräumen 2 dazu genutzt werden, die Kolben 4 zu bewegen. Diese Bewegungen der Kolben 4 werden unter Zwischenschaltung von Pleueln (nicht dargestellt) in eine Drehbewegung einer Kurbelwelle (nicht dargestellt) gewandelt, wobei die Führung der Kolben 4 über die Pleuel mittels der Kurbelwelle gleichzeitig zu einer zyklischen Hin-und-Her-Bewegung der Kolben 4 führt.

Die zur Verbrennung in den Brennräumen 2 vorgesehenen Gemischmengen umfassen einerseits Frischgas, das vollständig oder hauptsächlich aus Luft besteht, die aus der Umgebung angesaugt wird, und das, nach einer Filterung in einem Luftfilter (nicht dargestellt), dem Verbrennungsmotor 1, gesteuert mittels Einlassventilen (nicht dargestellt) des Verbrennungsmotors 1, über einen Frischgasstrang 5 zugeführt wird. Das Frischgas wird dabei über einen in den Frischgasstrang 5 integrierten Frischgasverdichter 6 geführt, mittels dessen eine Verdichtung des Frischgases bewirkt werden kann. Das Frischgas kann anschließend über einen Ladeluftkühler 33 geführt werden, um eine Erhöhung der Temperatur des Frischgases, die sich infolge der Verdichtung eingestellt hat, zumindest teilweise wieder rückgängig zu machen.

Die Gemischmengen umfassen weiterhin Kraftstoff, der direkt mittels Kraftstoffinjektoren 7 in die Brennräume 2 eingebracht und verbrannt werden kann.

Das bei der Verbrennung der Frischgas-Kraftstoff-Gemischmengen in den Brennräumen 2 entstandene (Roh-)Abgas wird, gesteuert mittels Auslassventilen (nicht dargestellt), aus den Brennräumen 2 abgeführt und in einen Abgasstrang 8 überführt. Das Abgas durchströmt dann als erstes eine in den Abgasstrang 8 integrierte erste Abgasnachbehandlungseinrichtung 9, anschließend eine Abgasturbine 10 und daraufhin, zumindest mit einer Teilmenge, eine zweite Abgasnachbehandlungseinrichtung 11. Anschließend wird dieses Abgas in die Umgebung abgeführt.

Die erste Abgasnachbehandlungseinrichtung 9 umfasst, in Strömungsrichtung des Abgases gesehen, einen Oxidationskatalysator 12 und daran anschließend eine Kombination eines Stickoxidspeichers 13 und eines Partikelfilters 14, wobei vorgesehen sein kann, dass der Stickoxidspeicher 13 als Beschichtung auf einem Filterkörper des Partikelfilters 14 ausgebildet ist.

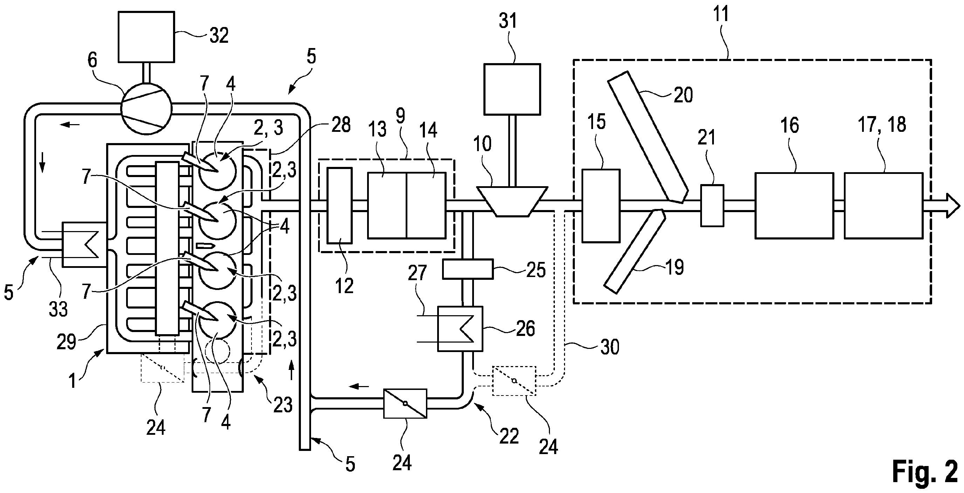

Bei der Brennkraftmaschine gemäß der Fig. 2 sind der Stickoxidspeicher 13 und der Partikelfilter 14 dagegen als separate Abgasnachbehandlungskomponenten vorgesehen, wobei der Stickoxidspeicher 13 stromauf des Partikelfilters 14 angeordnet ist. Im Übrigen entspricht die Brennkraftmaschine der Fig. 2 derjenigen der Fig. 1.

Die zweite Abgasnachbehandlungseinrichtung 11 umfasst als Abgasnachbehandlungskomponenten, in Strömungsrichtung des Abgases gesehen, einen optionalen Stickoxidspeicher 15 in Form eines Stickoxidadsorbers, einen Stickoxidreduktionskatalysator 16 sowie eine Kombination eines Oxidationskatalysators 17 und eines Partikelfilters 18, wobei auch in diesem Fall der Oxidationskatalysator 17 als Beschichtung auf einem Filterkörper des Partikelfilters 18 vorgesehen sein kann. Die zweite Abgasnachbehandlungseinrichtung 11 umfasst weiterhin, in einer Anordnung zwischen dem Stickoxidspeicher 15 und dem Stickoxidreduktionskatalysator 16, eine Injektionsvorrichtung 19 für ein Reduktionsmittel, eine Heizvorrichtung, bevorzugt in Form eines Brenners 20, sowie eine Mischvorrichtung 21 (in dieser Reihenfolge in Strömungsrichtung des Abgases gesehen).

Ein Teil des Abgases, das in den Abgasstrang 17 überführt wird, kann bedarfsweise über eine erste Abgasrückführleitung 22 und/oder eine optionale zweite Abgasrückführleitung 23 geführt und dann jeweils in den Frischgasstrang 13 eingeleitet werden. In jede dieser Abgasrückführleitungen 22, 23 ist ein Steuerventil 24 (Abgasrückführventil) integriert, das mittels einer Steuerungsvorrichtung (nicht dargestellt) ansteuerbar ist. In die erste Abgasrückführleitung 22 sind weiterhin ein Abgasfilter 25 und ein Abgaskühler 26 beziehungsweise eine erste Wärmetauschseite davon integriert. Die zweite Wärmetauschseite des Abgaskühlers 26 ist in ein Kühlsystem 27 der Brennkraftmaschine, das insbesondere auch den Verbrennungsmotor 1 beziehungsweise Kühlkanäle davon umfassen kann, integriert. Die erste Abgasrückführleitung 22 zweigt stromab der ersten Abgasnachhandlungseinrichtung 9 sowie stromauf der Abgasturbine 10 aus dem Abgasstrang 8 ab und mündet stromauf des Frischgasverdichters 6 in den Frischgasstrang 5. Die nur optional vorgesehene zweite Abgasrückführleitung 23 zweigt stromauf der ersten Abgasnachbehandlungseinrichtung 22 aus dem Abgasstrang 8, konkret aus einem Abgaskrümmer 28, d.h. aus dem ersten sich an den Verbrennungsmotor 1 anschließenden Abschnitt des Abgasstrangs 8, in dem das Abgas, das aus den einzelnen Brennräumen 2 stammt, zusammengeführt wird, ab. Die zweite Abgasrückführleitung 23 mündet stromab des Frischgasverdichters 6 in den Frischgasstrang 5. Konkret mündet die zweite Abgasrückführleitung 23 in ein Saugrohr 29, das den letzten Abschnitt des Frischgasstrangs 5 darstellt, in dem das Frischgas auf die einzelnen Brennräume 2 des Verbrennungsmotors 1 aufgeteilt wird.

Aus der ersten Abgasrückführleitung 22 und konkret stromab des Abgaskühlers 26 und stromauf des Steuerventils 24 zweigt eine Verbindungsleitung 30 ab, die stromab der Abgasturbine 10 sowie stromauf der zweiten Abgasnachhandlungseinrichtung 11 in den Abgasstrang 8 mündet. In die Verbindungsleitung 30 ist ebenfalls ein Steuerventil 24 integriert. Die Verbindungsleitung 30 ermöglicht, bedarfsweise Abgas, das nicht für eine Einleitung in den Frischgasstrang 5 (d.h. für eine Abgasrückführung), sondern für eine Einleitung in die Umgebung vorgesehen ist, über den Abgaskühler 26 zu führen. Dadurch kann Wärmeenergie dieses Abgases auf Kühlmittel des Kühlsystems 27 übertragen werden, so dass insbesondere während einer Warmlaufphase der Brennkraftmaschine eine möglichst schnelle Erwärmung von weiteren in das Kühlsystem integrierten Komponenten, wie beispielsweise dem Verbrennungsmotor 1, realisiert werden kann.

Sowohl die Abgasturbine 10 als auch der Frischgasverdichter 6 sind jeweils mit einer (eigenen) Elektromaschine 31, 32 antriebsverbunden, wobei diese Elektromaschinen 31, 32 jeweils mit einer Speichervorrichtung (nicht dargestellt), beispielsweise einer Batterie, elektrisch verbunden sind. Dadurch wird insbesondere ermöglicht, die Elektromaschine 32 des Frischgasverdichter 6 mit elektrischer Energie, die durch einen generatorischen Betrieb der Elektromaschine 31 der Abgasturbine 10 erzeugt wurde, zu betreiben. Die Zwischenkopplung der Speichervorrichtung in die elektrische Verbindung zwischen den Elektromaschinen 31, 32 ermöglicht dabei einen in Grenzen hinsichtlich der Leistung unabhängigen beziehungsweise entkoppelten Betrieb der Elektromaschinen 31, 32.

Die Koppelung der Abgasturbine 10 und des Frischgasverdichters 6 mit jeweils einer Elektromaschine 31, 32 ermöglicht einen vorteilhaften Betrieb der Brennkraftmaschine, insbesondere hinsichtlich des Abgasemissionsverhaltens.

Beispielsweise kann vorgesehen sein, dass in einer Warmlaufphase der Brennkraftmaschine, die sich insbesondere unmittelbar an einen Kaltstart anschließen kann, die Abgasturbine 10 relativ stark generatorisch mittels der zugeordneten Elektromaschine 31 zu belasten, wodurch diese beziehungswiese ein dazugehöriges Turbinenlaufrad relativ langsam rotiert, was zu einem relativ stark ausgeprägten Aufstauen von Abgas stromauf der Abgasturbine 10 führt. Dadurch kann ein relativ schnelles Aufheizen der ersten Abgasnachbehandlungseinrichtung 9 erreicht werden, die dadurch möglichst schnell für eine im Wesentlichen vollständige Schadstoffminderung in dem Abgas sorgen kann.

Gleichzeitig, d.h. zumindest auch während der Warmlaufphase und insbesondere unmittelbar nach einem Kaltstart der Brennkraftmaschine, wird der Brenner 20 in Betrieb genommen, um eine möglichst schnelle Erwärmung zumindest des Stickoxidreduktionskatalysators 16 zu realisieren. Dadurch soll der Stickoxidreduktionskatalysator 16 ausreichend schnell zumindest seine Anspringtemperatur erreichen. Stickoxide, die der Stickoxidspeicher 13 der ersten Abgasnachbehandlungseinrichtung zuvor eingespeichert hat und die dieser aufgrund des schnellen Erreichens seiner Desorptionstemperatur wieder freigesetzt hat, können dann den Stickoxidreduktionskatalysator nicht mehr passieren, so dass verhindert wird, dass diese in die Umgebung eingeleitet werden.

Reduktionsmittel für die Reduktion von Stickoxiden durch den Stickoxidreduktionskatalysator 16 kann mittels der Injektionsvorrichtung 19 in das Abgas eingebracht werden, sobald die Mischvorrichtung 21 ausreichend warm ist und sobald zumindest ein erster Abschnitt des Stickoxidreduktionskatalysators 16 die dazugehörige Anspringtemperatur erreicht hat.

Die durch den Betrieb des Brenners 20 erzeugten Abgase können in ausreichendem Maße mittels der Kombination aus Oxidationskatalysator 17 und Partikelfilter 18 der zweiten Abgasnachbehandlungseinrichtung 11 nachbehandelt werden.

Ebenfalls gleichzeitig, d.h. zumindest auch während der Warmlaufphase und insbesondere unmittelbar nach einem Kaltstart, kann vorgesehen sein, dass der Frischgasverdichter 6 nicht betrieben oder sogar mittels der dazugehörigen Elektromaschine 32 generatorisch belastet wird, wodurch das dem Verbrennungsmotor 1 zugeführte Frischgas stark gedrosselt werden kann. Dies führt dann zu einer Verringerung der Füllung der Brennräume 2, wodurch gleichzeitig umgesetzte innermotorische Maßnahmen, die darauf abzielen, relativ heißes Abgas zu erzeugen (was wiederum mit dem Ziel erfolgt, die Abgasnachbehandlungseinrichtungen 9, 11 und insbesondere die erste Abgasnachbehandlungseinrichtung 11 möglichst schnell aufzuheizen) unterstützen kann.

Ein Antrieb des Frischgasverdichters 6 mittels der dazugehörigen Elektromaschine weist auch den Vorteil auf, dass der Frischgasverdichter 6 beziehungsweise das Verdichterlaufrad davon relativ groß dimensioniert werden können, weil der Nachteil einer relativ großen Trägheit, die mit einer solchen Dimensionierung verbunden ist, durch den elektrischen Antrieb kompensiert werden kann. Ein solcher relativ großer Frischgasverdichter 6 weist den Vorteil auf, dass nur relativ geringe Betriebsdrehzahlen zum Erzielen einer definierten Verdichtungsleistung erforderlich sind. Relativ geringe Betriebsdrehzahlen weisen u.a. den Vorteil auf, dass der Frischgasverdichter 6 relativ unempfindlich gegenüber Wasserschlag ist. Die relativ große Dimensionierung des Frischgasverdichters 6 ermöglicht daher, relativ schnell nach einem Kaltstart der Brennkraftmaschine Abgas über die erste Abgasrückführleitung 22 zu führen, obwohl dieses noch relativ kalte Abgas mit einer erhöhten Gefahr einer Kondensation von Wasser und dem Eintragen dieses Wassers in den Frischgasverdichter 6 einhergeht. Eine möglichst frühe Abgasrückführung wirkt sich vorteilhaft insbesondere hinsichtlich der Stickoxidrohemissionen des Verbrennungsmotors 1 aus.

Eine Abgasrückführung kann folglich bereits kurz nach dem Kaltstart der Brennkraftmaschine eingeleitet werden, was dann gleichzeitig mit dem bereits beschriebenen generatorischen Betrieb der der Abgasturbine 10 zugeordneten Elektromaschine 31 einhergehen kann. Das durch diesen generatorischen Betrieb der Elektromaschine 31 bewirkte Aufstauen von Abgas stromauf der Abgasturbine 10 wirkt sich dann auch positiv hinsichtlich der Abgasrückführung aus, weil dadurch ein relativ großes Druckgefälle über der ersten Abgasrückführleitung 22 realisiert wird, durch das ein Strömen von Abgas über die erste Abgasrückführleitung 22 bewirkt werden kann. Der erzielte relativ hohe Druck in dem Abzweig der ersten Abgasrückführleitung 22 kann dabei insbesondere auch dann vorteilhaft sein, wenn infolge eines Nichtbetriebs oder einer generatorischen Belastung des Frischgasverdichters 6, wie bereits beschrieben, der Druck des Frischgases im Bereich der Mündung der ersten Abgasrückführleitung 22 relativ hoch ist.

Durch die Antriebsverbindung der Abgasturbine 10 mit der dazugehörigen Elektromaschine 31 und konkret durch einen relativ schwachen generatorischen oder sogar einen motorischen Betrieb dieser Elektromaschine 31 kann weiterhin in bestimmten Betriebszuständen des Verbrennungsmotors 1, insbesondere nach Lastsprüngen, gezielt ein relativ geringer Druck des Abgases in dem Abschnitt des Abgasstrangs 8, der zwischen dem Verbrennungsmotor 1 und der Abgasturbine 10 gelegen ist, realisiert werden. Dadurch kann ein möglichst geringer Restgasgehalt in den Brennräumen 2 realisiert werden, was sich vorteilhaft auf die Partikelrohemissionen des Verbrennungsmotors 1 auswirken kann. Auch kann sich der auf diese Weise verminderte Abgasgegendruck vorteilhaft auf das Betriebsverhalten des Verbrennungsmotors 1 auswirken. Ein solches Vorgehen kann temporär sowohl während einer Warmlaufphase als auch während eines Normalbetriebs der (dann betriebswarmen) Brennkraftmaschine vorgesehen sein.

Weiterhin kann ein verstärkter Generatorbetrieb der der Abgasturbine 10 zugeordneten Elektromaschine 31 beziehungsweise eine entsprechende relativ große generatorische Belastung der Abgasturbine 10 zu einer möglichst weitgehenden Nutzung der Abgasenthalpie führen. Dies kann gezielt ausgenutzt werden, um in einem Hoch- und insbesondere Volllastbetrieb des Verbrennungsmotors 1 (insbesondere oder ausschließlich während eines Normalbetriebs) zu vermeiden, dass sich die zweite Abgasnachbehandlungseinrichtung 11 und insbesondere der Stickoxidreduktionskatalysator 16 davon zu stark aufheizt, wodurch anderenfalls insbesondere die Fähigkeit des Stickoxidreduktionskatalysators 16 zur Stickoxidreduktion verringert werden könnte.

Weiterhin kann durch einen verminderten Generatorbetrieb oder sogar einen motorischen Betrieb der der Abgasturbine 10 zugeordneten Elektromaschine 31 in einem Schwachlastbetrieb des Verbrennungsmotors 1 (insbesondere oder ausschließlich während eines Normalbetriebs) gezielt relativ oder sogar möglichst wenig Abgasenthalpie in der Abgasturbine 10 umgesetzt werden. Dies kann mit dem Ziel erfolgen, ein zu starkes Auskühlen der zweiten Abgasnachbehandlungseinrichtung 11 und insbesondere des Stickoxidreduktionskatalysators 16 davon zu vermeiden.

### BEZUGSZEICHENLISTE

- 1: Verbrennungsmotor
- 2: Brennraum
- 3: Zylinderöffnung
- 4: Kolben
- 5: Frischgasstrang
- 6: Frischgasverdichter
- 7: Kraftstoffinjektor
- 8: Abgasstrang
- 9: erste Abgasnachbehandlungseinrichtung
- 10: Abgasturbine
- 11: zweite Abgasnachbehandlungseinrichtung
- 12: Oxidationskatalysator der ersten Abgasnachbehandlungseinrichtung
- 13: Stickoxidspeicher der ersten Abgasnachbehandlungseinrichtung
- 14: Partikelfilter der ersten Abgasnachbehandlungseinrichtung
- 15: Stickoxidspeicher der zweiten Abgasnachbehandlungseinrichtung
- 16: Stickoxidreduktionskatalysator
- 17: Oxidationskatalysator der zweiten Abgasnachbehandlungseinrichtung
- 18: Partikelfilter der zweiten Abgasnachbehandlungseinrichtung
- 19: Injektionsvorrichtung
- 20: Brenner
- 21: Mischvorrichtung
- 22: erste Abgasrückführleitung
- 23: zweite Abgasrückführleitung
- 24: Steuerventil
- 25: Abgasfilter
- 26: Abgaskühler
- 27: Kühlsystem
- 28: Abgaskrümmer
- 29: Saugrohr
- 30: Verbindungsleitung
- 31: Elektromaschine der Abgasturbine
- 32: Elektromaschine des Frischgasverdichters
- 33: Ladeluftkühler

## Patentansprüche

1. Verfahren zum Betreiben einer Brennkraftmaschine mit
• einem Verbrennungsmotor (1),
• einem Abgasstrang (8), in den eine Abgasturbine (10), die mit einer Elektromaschine (31) antriebsverbunden ist, und eine erste Abgasnachbehandlungseinrichtung (9) integriert sind, wobei die erste Abgasnachbehandlungseinrichtung (9) stromauf der Abgasturbine (10) angeordnet ist, und
• einem Frischgasstrang (5), in den ein Frischgasverdichter (6) integriert ist, **dadurch gekennzeichnet, dass** der Frischgasverdichter (6) mit einer weiteren Elektromaschine (32) antriebsverbunden ist, wobei zumindest temporär ein generatorischer oder motorischer Betrieb von einer oder beiden der Elektromaschinen (31, 32) in Abhängigkeit von
• der Temperatur von Abgas stromauf und/oder stromab der Abgasturbine (10) und/oder
• von einem Druckgefälle, das über einer Abgasrückführleitung (22) anliegt, die stromauf der Abgasturbine (10) aus dem Abgasstrang (8) abgeht und stromauf des Frischgasverdichters (6) in den Frischgasstrang (5) mündet, gesteuert wird.

2. Verfahren gemäß Anspruch 1, **dadurch gekennzeichnet, dass** die (erste) Abgasnachbehandlungseinrichtung (9) einen Oxidationskatalysator (12) und/oder einen Stickoxidspeicher (13) und/oder einen Partikelfilter (14) umfasst.

3. Verfahren gemäß einem der vorhergehenden Ansprüche, **gekennzeichnet durch** eine zweite Abgasnachbehandlungseinrichtung (11), die stromab der Abgasturbine (10) in den Abgasstrang (8) integriert ist.

4. Verfahren gemäß Anspruch 3, **dadurch gekennzeichnet, dass** die zweite Abgasnachbehandlungseinrichtung (11) einen Stickoxidreduktionskatalysator (16) und eine Heizvorrichtung umfasst.

5. Verfahren gemäß Anspruch 4, **dadurch gekennzeichnet, dass** die Heizvorrichtung einen Brenner (20) umfasst.

6. Verfahren gemäß Anspruch 4 oder 5, **dadurch gekennzeichnet, dass** zwischen der Heizvorrichtung und dem Stickoxidreduktionskatalysator (16) eine Mischvorrichtung (21) in dem Abgasstrang (8) angeordnet ist.

7. Verfahren gemäß einem der Ansprüche 3 bis 6, **dadurch gekennzeichnet, dass** die zweite Abgasnachbehandlungseinrichtung (11) einen Oxidationskatalysator (17) und/oder einen Stickoxidspeicher (15) und/oder einen Partikelfilter (18) umfasst.

8. Verfahren gemäß Anspruch 4 und Anspruch 7, **dadurch gekennzeichnet, dass**
• der Stickoxidspeicher (15) stromauf des Stickoxidreduktionskatalysators (16) und/oder
• der Oxidationskatalysator (17) und/oder der Partikelfilter (18) stromab des Stickoxidreduktionskatalysators (16) in dem Abgasstrang (8) angeordnet ist/sind.

9. Verfahren gemäß einem der vorhergehenden Ansprüche, **gekennzeichnet durch** eine mit dem Verbrennungsmotor (1) antriebsverbundene, elektrische Antriebsmaschine.

10. Verfahren gemäß einem der vorhergehenden Ansprüche, **dadurch gekennzeichnet, dass** der Verbrennungsmotor (1) selbstzündend ausgestaltet ist.

11. Verfahren gemäß einem der vorhergehenden Ansprüche, **dadurch gekennzeichnet, dass** die mit der Abgasturbine (10) antriebsverbundene Elektromaschine (31) temporär zur gezielten Temperierung der ersten Abgasnachbehandlungseinrichtung (9) in einem Maße generatorisch betrieben wird, der über den aktuellen elektrischen Bedarf der mit dem Frischgasverdichter (6) antriebsverbundenen Elektromaschine (32) hinausgeht.

12. Verfahren gemäß Anspruch 4 oder einem der von Anspruch 4 abhängigen Ansprüche und gemäß Anspruch 11, **dadurch gekennzeichnet, dass** gleichzeitig die Heizvorrichtung betrieben wird, wobei die gezielte Temperierung durch den generatorischen Betrieb der mit der Abgasturbine (10) antriebsverbundenen Elektromaschine (31) so gesteuert wird, dass der Stickoxidreduktionskatalysator (16) der zweiten Abgasnachbehandlungseinrichtung (11) seine Anspringtemperatur erreicht, bevor der Stickoxidspeicher (13) der ersten Abgasnachbehandlungseinrichtung (9) seine Desorptionstemperatur erreicht.

13. Verfahren gemäß einem der Ansprüche 11 oder 12, **dadurch gekennzeichnet, dass** ein generatorischer Betrieb der mit der Abgasturbine (10) antriebsverbundenen Elektromaschine (31) temporär zur gezielten Begrenzung einer Betriebstemperatur der zweiten Abgasnachbehandlungseinrichtung (11) gesteuert wird.

## Claims

1. Method for operating a combustion machine having
• an internal combustion engine (1),
• an exhaust-gas tract (8) into which an exhaust-gas turbine (10), which is connected in terms of drive to an electric machine (31), and a first exhaust-gas aftertreatment device (9) are integrated, wherein the first exhaust-gas aftertreatment device (9) is arranged upstream of the exhaust-gas turbine (10), and
• a fresh-gas tract (5) into which a fresh-gas compressor (6) is integrated, **characterized in that** the fresh-gas compressor (6) is connected in terms of drive to a further electric machine (32), wherein operation as a generator or as a motor of one or both of the electric machines (31, 32) is at least temporarily controlled in a manner dependent on
• the temperature of exhaust gas upstream and/or downstream of the exhaust-gas turbine (10) and/or
• on a pressure drop which prevails across an exhaust-gas return line (22) that departs from the exhaust-gas tract (8) upstream of the exhaust-gas turbine (10) and opens out into the fresh-gas tract (5) upstream of the fresh-gas compressor (6).

2. Method according to Claim 1, **characterized in that** the (first) exhaust-gas aftertreatment device (9) comprises an oxidation catalytic converter (12) and/or a nitrogen-oxide store (13) and/or a particle filter (14).

3. Method according to either of the preceding claims, **characterized by** a second exhaust-gas aftertreatment device (11) which is integrated into the exhaust-gas tract (8) downstream of the exhaust-gas turbine (10).

4. Method according to Claim 3, **characterized in that** the second exhaust-gas aftertreatment device (11) comprises a nitrogen-oxide-reduction catalytic converter (16) and a heating apparatus.

5. Method according to Claim 4, **characterized in that** the heating apparatus comprises a burner (20).

6. Method according to Claim 4 or 5, **characterized in that** a mixing apparatus (21) is arranged in the exhaust-gas tract (8) between the heating apparatus and the nitrogen-oxide-reduction catalytic converter (16).

7. Method according to one of Claims 3 to 6, **characterized in that** the second exhaust-gas aftertreatment device (11) comprises an oxidation catalytic converter (17) and/or a nitrogen-oxide store (15) and/or a particle filter (18).

8. Method according to Claim 4 and Claim 7, **characterized in that**
• the nitrogen-oxide store (15) is arranged upstream of the nitrogen-oxide-reduction catalytic converter (16) and/or
• the oxidation catalytic converter (17) and/or the particle filter (18) are/is arranged downstream of the nitrogen-oxide-reduction catalytic converter (16) in the exhaust-gas tract (8).

9. Method according to one of the preceding claims, **characterized by** an electric drive machine which is connected in terms of drive to the internal combustion engine (1).

10. Method according to one of the preceding claims, **characterized in that** the internal combustion engine (1) is designed as an auto-ignition engine.

11. Method according to one of the preceding claims, **characterized in that** the electric machine (31) connected in terms of drive to the exhaust-gas turbine (10) is, for targeted temperature control of the first exhaust-gas aftertreatment device (9), temporarily operated as a generator to an extent which exceeds the present electrical demand of the electric machine (32) connected in terms of drive to the fresh-gas compressor (6).

12. Method according to Claim 4 or one of the claims dependent on Claim 4 and according to Claim 11, **characterized in that** the heating apparatus is operated simultaneously, wherein the targeted temperature control by way of the operation as a generator of the electric machine (31) connected in terms of drive to the exhaust-gas turbine (10) is controlled in such a way that the nitrogen-oxide-reduction catalytic converter (16) of the second exhaust-gas aftertreatment device (11) attains its light-off temperature before the nitrogen-oxide store (13) of the first exhaust-gas aftertreatment device (9) attains its desorption temperature.

13. Method according to either of Claims 11 and 12, **characterized in that** operation as a generator of the electric machine (31) connected in terms of drive to the exhaust-gas turbine (10) is temporarily controlled for targeted limitation of an operating temperature of the second exhaust-gas aftertreatment device (11).

## Revendications

1. Procédé permettant de faire fonctionner un moteur à combustion interne, comprenant
• un moteur thermique (1),
• un tronçon de gaz d'échappement (8) dans lequel une turbine à gaz d'échappement (10) reliée en entraînement à une machine électrique (31) et un premier dispositif de post-traitement de gaz d'échappement (9) sont intégrés, le premier dispositif de post-traitement de gaz d'échappement (9) étant disposé en amont de la turbine à gaz d'échappement (10), et
• un tronçon de gaz frais (5) dans lequel est intégré un compresseur de gaz frais (6),
**caractérisé en ce que** le compresseur de gaz frais (6) est relié en entraînement à une machine électrique supplémentaire (32), dans lequel au moins temporairement un fonctionnement en mode générateur ou en mode moteur d'une ou des deux machines électriques (31, 32) est commandé en fonction
• de la température des gaz d'échappement en amont et/ou en aval de la turbine à gaz d'échappement (10), et/ou
• d'une différence de pression qui est présente le long d'une conduite de recirculation des gaz d'échappement (22) qui quitte le tronçon de gaz d'échappement (8) en amont de la turbine à gaz d'échappement (10) et débouche sur le tronçon de gaz frais (5) en amont du compresseur de gaz frais (6).

2. Procédé selon la revendication 1, **caractérisé en ce que** le (premier) dispositif de post-traitement de gaz d'échappement (9) comprend un convertisseur catalytique à oxydation (12) et/ou un accumulateur d'oxyde d'azote (13) et/ou un filtre à particules (14).

3. Procédé selon l'une quelconque des revendications précédentes, **caractérisé par** un deuxième dispositif de post-traitement de gaz d'échappement (11) qui est intégré dans le tronçon de gaz d'échappement (8) en aval de la turbine à gaz d'échappement (10).

4. Procédé selon la revendication 3, **caractérisé en ce que** le deuxième dispositif de post-traitement de gaz d'échappement (11) comprend un convertisseur catalytique à réduction d'oxyde d'azote (16) et un dispositif de chauffage.

5. Procédé selon la revendication 4, **caractérisé en ce que** le dispositif de chauffage comprend un brûleur (20) .

6. Procédé selon la revendication 4 ou 5, **caractérisé en ce qu'**un mélangeur (21) est disposé dans le tronçon de gaz d'échappement (8) entre le dispositif de chauffage et le convertisseur catalytique à réduction d'oxyde d'azote (16).

7. Procédé selon l'une quelconque des revendications 3 à 6, **caractérisé en ce que** le deuxième dispositif de post-traitement de gaz d'échappement (11) comprend un convertisseur catalytique à oxydation (17) et/ou un accumulateur d'oxyde d'azote (15) et/ou un filtre à particules (18).

8. Procédé selon la revendication 4 et la revendication 7, **caractérisé en ce que**
• l'accumulateur d'oxyde d'azote (15) est disposé en amont du convertisseur catalytique à réduction d'oxyde d'azote (16), et/ou
• le convertisseur catalytique à oxydation (17) et/ou le filtre à particules (18) sont disposés en aval du convertisseur catalytique à réduction d'oxyde d'azote (16)
dans le tronçon de gaz d'échappement (8).

9. Procédé selon l'une quelconque des revendications précédentes, **caractérisé par** une machine d'entraînement électrique reliée en entraînement au moteur thermique (1) .

10. Procédé selon l'une quelconque des revendications précédentes, **caractérisé en ce que** le moteur thermique (1) est à auto-allumage.

11. Procédé selon l'une quelconque des revendications précédentes, **caractérisé en ce que** la machine électrique (31) reliée en entraînement à la turbine à gaz d'échappement (10) fonctionne temporairement pour une mise en température ciblée du premier dispositif de post-traitement de gaz d'échappement (9) en mode générateur dans une mesure qui dépasse les besoins électriques actuels de la machine électrique (32) reliée en entraînement au compresseur de gaz frais (6).

12. Procédé selon la revendication 4 ou selon l'une des revendications dépendant de la revendication 4, et selon la revendication 11, **caractérisé en ce que** le dispositif de chauffage fonctionne en même temps, dans lequel la mise en température ciblée est commandée par le fonctionnement en mode générateur de la machine électrique (31) reliée en entraînement à la turbine à gaz d'échappement (10) de telle sorte que le convertisseur catalytique à réduction d'oxyde azote (16) du deuxième dispositif de post-traitement de gaz d'échappement (11) atteint sa température d'amorçage avant que l'accumulateur d'oxyde d'azote (13) du premier dispositif de post-traitement de gaz d'échappement (9) n'atteigne sa température de désorption.

13. Procédé selon l'une quelconque des revendications 11 ou 12, **caractérisé en ce qu'**un fonctionnement en mode générateur de la machine électrique (31) reliée en entraînement à la turbine à gaz d'échappement (10) est commandé temporairement pour la limitation ciblée d'une température de fonctionnement du deuxième dispositif de post-traitement de gaz d'échappement (11).
